# DEMANDE DE BREVET EUROPEEN

(11) **EP 3 081 543 A1**
(43) Date de publication de la demande: **19.10.2016**
(21) Numéro de dépôt: 16165881.0
(22) Date de dépôt: 18.04.2016
(51) Int. Cl.: C03C 17/00, C03C 17/34, F21S 8/10, F21V 3/04, G02B 27/00, C08J 7/04

(54) **GLACE POUR PROJECTEUR LUMINEUX DE VÉHICULE AUTOMOBILE MUNIE D'UN REVÊTEMENT**

(30) Priorité: 16.04.2015 FR 1553356
(71) Demandeur: VALEO VISION, 93012 Bobigny Cedex (FR)
(72) Inventeur: FAOUCHER, Erwan, 49240 Avrille (FR); MENN, Thibault, 75011 Paris (FR)

(57) **Abrégé**

Cette glace (2) pour projecteur lumineux, notamment d'éclairage et/ou de signalisation pour véhicule automobile comporte une surface interne (4) recouverte au moins partiellement d'un revêtement (6). Le revêtement (6) comporte au moins une couche (8) comprenant un matériau hydrophile et au moins une couche (10) comprenant un matériau hydrophobe, la couche la plus éloignée de la surface interne étant en matériau hydrophobe.

## Description

La présente invention concerne le domaine technique des projecteurs lumineux de véhicule automobile. Plus particulièrement, l'invention concerne une glace pour projecteur lumineux de véhicule automobile.

Un véhicule automobile comprend généralement des projecteurs lumineux formant divers feux d'éclairage ou de signalisation. Un projecteur lumineux comporte notamment une source de lumière, émettant un faisceau lumineux, et divers éléments optiques. Afin de protéger les éléments d'un projecteur lumineux à l'égard des contraintes extérieures diverses, par exemple mécaniques ou météorologiques, il est connu d'équiper le projecteur lumineux d'une glace de protection, transparente au faisceau lumineux.

Toutefois, cette glace n'apporte pas d'étanchéité complète à l'humidité. En effet, la glace n'empêche pas l'air, notamment l'air humide, de s'infiltrer dans le projecteur lumineux. L'eau contenue dans l'air est ainsi susceptible de former des gouttes de condensation sur une surface interne de la glace, c'est-à-dire à l'intérieur du projecteur lumineux. Ces gouttes de condensation gênent localement le passage du faisceau lumineux à travers la glace, et réduisent ainsi la performance du feu. En coulant le long de la surface, les gouttes de condensation peuvent également y laisser des traces qui, en plus d'être inesthétiques, réduisent également la performance du feu. De plus, ces gouttes absorbent une partie de l'énergie transportée par le faisceau lumineux, ce qui engendre une baisse de l'efficacité du feu.

Pour pallier ce problème, il est connu de revêtir la surface interne de la glace avec un matériau hydrophile. On connait ainsi dans l'état de la technique une glace pour projecteur lumineux de véhicule automobile comportant une surface interne recouverte au moins partiellement d'un revêtement hydrophile. Un tel revêtement a pour fonction de répartir la goutte de condensation sur toute la surface interne de la glace, de manière à ce que la goutte prenne la forme d'une couche d'eau d'épaisseur quasiment uniforme. Mais lorsque l'air est trop humide, le revêtement finit par saturer. Des goulettes se forment alors et coulent le long de la surface interne de la glace, ce qui engendre les inconvénients évoqués plus haut.

Par ailleurs, des problèmes de givrage surviennent lorsque la glace est à une température inférieure à 0°C et en contact d'air humide. L'eau contenue dans l'air se condense sur la surface interne de la glace, et est susceptible de geler, ce qui réduit davantage l'efficacité du feu. Une solution est de chauffer la glace à une température supérieure à 0°C, mais ceci engendre un surplus de consommation d'énergie et un délai d'attente pendant lequel on doit laisser la glace chauffer.

Un but de l'invention est d'empêcher ou au moins de limiter la formation de gouttes de condensation ou de givre sur une glace de projecteur lumineux pour véhicule automobile.

A cet effet, on prévoit selon l'invention une glace pour projecteur lumineux, notamment d'éclairage et/ou de signalisation pour véhicule automobile comportant une surface interne recouverte au moins partiellement d'un revêtement, caractérisée en ce que le revêtement comporte au moins une couche comprenant un matériau hydrophile et au moins une couche comprenant un matériau hydrophobe, la couche la plus éloignée de la surface interne étant en matériau hydrophobe.

Ainsi, la couche la plus éloignée étant en matériau hydrophobe, seules des petites gouttelettes de condensation peuvent se former à la surface du revêtement, car les gouttes de taille plus importante coulent par gravité du fait de l'hydrophobie de la couche ou se fractionnent. La couche en matériau hydrophile située en-dessous de la couche hydrophobe absorbe les gouttelettes, qui diffusent alors à travers cette couche hydrophobe. La couche en matériau hydrophile répartit alors l'eau de la gouttelette sur toute la surface du revêtement de manière connue en soi. On comprend ainsi qu'une grande partie de l'eau est évacuée par la couche hydrophobe, les gouttelettes résiduelles étant absorbées et réparties sur toute la surface du revêtement par la couche hydrophile. De plus, étant donné que l'eau est mieux répartie dans le revêtement, l'effet du givrage est réduit.

Avantageusement, la couche du revêtement en contact avec la surface interne de la glace comprend au moins une partie hydrophile du revêtement.

Une couche en matériau hydrophile formant une couche d'accroche efficace sur les matériaux constituant généralement une glace pour projecteur lumineux, on améliore ainsi la tenue mécanique du revêtement sur la glace.

Avantageusement, la couche en matériau hydrophile est super hydrophile et la couche en matériau hydrophobe est super hydrophobe.

Ces types de matériaux permettent d'obtenir une efficacité optique plus importante encore que celle des matériaux énoncés plus haut.

Avantageusement, le revêtement est constitué d'une alternance de couches hydrophiles et hydrophobes, le revêtement comprenant six à vingt-quatre couches au total.

Avantageusement, deux couches hydrophile et hydrophobe successives ont chacune une épaisseur supérieure ou égale à 10 nm.

Avantageusement, le revêtement a une épaisseur totale comprise entre 20 et 480 nm, de préférence entre 80 et 120 nm.

Ces propriétés géométriques permettent de former un revêtement formant un bon compromis entre les propriétés optiques et mécanique du revêtement. De plus, un nombre élevé de couches et une grande épaisseur totale du revêtement augmente le volume d'eau que peut absorber le revêtement avant qu'il n'arrive à saturation.

De préférence, au moins une couche parmi les couches hydrophile et hydrophobe comprend un polysaccharide.

Les molécules d'eau étant aptes à former des liaisons de type « hydrogène », notamment avec les groupements de type « hydroxyle », « oxygène » et « carboxyle » présents dans tout polysaccharide, on facilite ainsi la diffusion de l'eau à travers les différentes couches du revêtement et la répartition de l'eau dans les couches.

De préférence, le matériau hydrophile comprend de la carboxyméthylcellulose (CMC), ou un copolymère d'acide poly-acrylique et de polyéthylène glycol (PAA-g-PEG).

De préférence, la teneur en PEG du copolymère est comprise entre 20 % et 60%, plus particulièrement entre 30 % et 50 %

De préférence, le matériau hydrophobe comprend du chitosane (CHI).

Ces matériaux sont peu onéreux et ont des propriétés mécanique et respectivement hydrophile et hydrophobe tout à fait acceptables. De plus, les matériaux des couches hydrophiles peuvent avoir des affinités chimiques avec le matériau de la glace, par exemple lorsqu'elle est réalisée en polycarbonate ou en polyméthacrylate de méthyle. Si ce n'est pas le cas, l'accroche des couches se fera physiquement, par pénétration du matériau hydrophile en contact avec la glacer dans le matériau de la glace et enchevêtrement des chaines de ces deux matériaux si ce sont des polymères.

Avantageusement, la glace est fabriquée au moins en partie dans un matériau choisi parmi le silicone, le polycarbonate (PC), le polyméthacrylate de méthyle (PMMA) et un verre.

Ces matériaux sont performants pour transmettre un faisceau lumineux dont le spectre lumineux est inclus dans le domaine visible. De plus, ces matériaux sont aptes à collaborer avec la couche du revêtement en contact avec la surface interne de la glace pour former une couche d'accroche mécaniquement durable.

On prévoit également selon l'invention un projecteur lumineux, notamment d'éclairage et/ou de signalisation pour véhicule automobile, comprenant une glace telle que décrite plus haut.

On prévoit aussi un procédé de dépôt d'un revêtement sur une surface interne d'une glace pour projecteur lumineux de véhicule automobile comprenant les étapes suivantes :
- au moins une première couche d'un matériau hydrophile est déposée sur la surface interne de la glace par trempage ou par enduction centrifuge,
- puis au moins une seconde couche d'un matériau hydrophobe est déposée sur la première couche par trempage ou par enduction centifuge.

Ce procédé est adapté pour déposer un revêtement sur une glace pour projecteur lumineux selon l'invention.

Avantageusement, les étapes sont répétées selon le nombre de couches souhaité du revêtement.

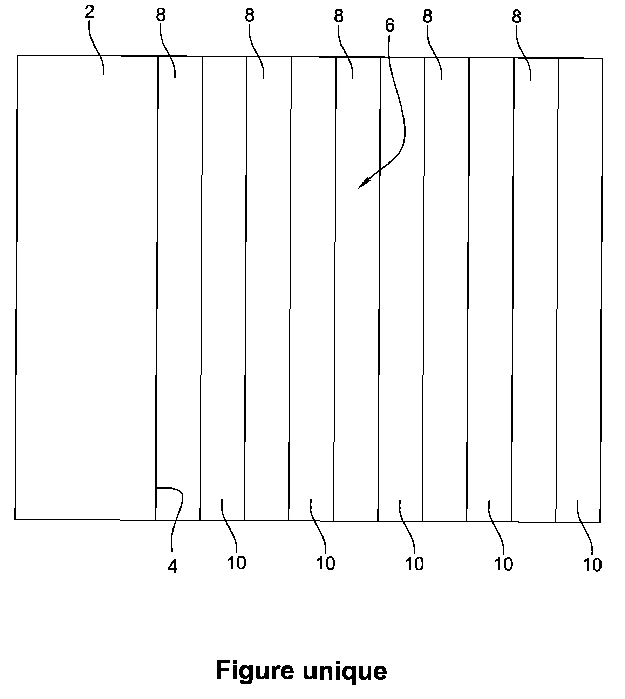

L'invention sera mieux comprise à la lecture de la description qui va suivre donnée uniquement à titre d'exemple et faite en référence aux dessins dans lesquels la figure unique est un schéma de glace de projecteur lumineux revêtue selon l'invention.

On a illustré sur cette figure unique une glace 2 pour projecteur lumineux, notamment d'éclairage et/ou de signalisation pour véhicule automobile comportant une surface interne 4 recouverte au moins partiellement d'un revêtement 6. La glace est fabriquée au moins en partie dans un matériau choisi parmi le silicone, le polycarbonate (PC), le polyméthacrylate de méthyle (PMMA) et un verre.

Le revêtement 6 comporte au moins une couche comprenant un matériau hydrophile 8 et au moins une couche comprenant un matériau hydrophobe 10, la couche la plus éloignée de la surface interne étant en matériau hydrophobe. La couche en contact avec la surface interne 4 de la glace 2 comprend au moins une partie hydrophile du revêtement.

En l'espèce, le revêtement 6 est constitué d'une alternance de couches hydrophiles 8 et hydrophobes 10. Le revêtement 6 comprend dix couches, plus précisément cinq couches hydrophiles 8 et cinq couches hydrophobes 10. On pourra toutefois prévoir que le revêtement 6 comprenne six à vingt-quatre couches au total.

Deux couches hydrophile 8 et hydrophobe 10 successives ont chacune une épaisseur supérieure ou égale à 10 nm. Le revêtement 6 a une épaisseur totale comprise entre 20 et 480 nm, de préférence entre 80 et 120 nm.

On va maintenant détailler un procédé de dépôt du revêtement 6 sur la surface interne 4 de la glace 2 selon l'invention. Ce procédé qui va être décrit est applicable à la glace 2 fabriquée dans un des matériaux décrits plus haut. Bien entendu, ce procédé donné à titre d'exemple de réalisation n'est pas limitatif en soi, et on pourra prévoir de modifier ou de supprimer certaines de ses étapes, ou bien d'en ajouter.

On nettoie dans un premier temps la glace 2 et sa surface interne 4 de manière connue en soi. Puis on immerge immédiatement la glace 2 dans une solution anhydre de toluène à 1% de (3-glycidoxypropyl)-trimethoxylane pendant environ dix heures. On rince ensuite la glace 2 avec du toluène pur. On pourra prévoir de remplacer le toluène par un autre solvant organique anhydre tel que du chloroforme ou de l'hexane. Par la suite, on sèche et on immerge la glace 2 dans une solution aqueuse de pH environ égal à 9 comprenant du polyéthylénimine à une concentration de 0,01 mol.L⁻¹ pendant au moins quatre heures, avant de la rincer à l'eau. On a ainsi préparé la surface interne 4 de la glace à recevoir le revêtement 6. On dit que l'on a fonctionnalisé la surface interne de la glace.

On dépose par la suite le revêtement 6 sur la surface interne 4 de la glace 2. Pour ce faire, l'enchainement d'étapes suivant est suivi :
- au moins une première couche 8 d'un matériau hydrophile est déposée sur la surface interne 4 de la glace 2 par trempage ou par enduction centrifuge,
- puis on dépose au moins une seconde couche 10 d'un matériau hydrophobe est déposée sur la première couche par trempageou par enduction centrifuge (en anglais « spin coating ».

On répète cet enchainement d'étapes selon le nombre de couches souhaité du revêtement 6. Alternativement, au moins une couche parmi les couches hydrophile 8 et hydrophobe 10 comprend un polysaccharide, ou bien on choisit le matériau hydrophile parmi la carboxyméthylcellulose (CMC), et un mélange d'acide poly-acrylique et de polyéthylène glycol (PAA-g-PEG), et le chitosane (CHI) comme matériau hydrophobe. On pourra également prévoir qu'au moins une couche en matériau hydrophile est super hydrophile et qu'au moins une couche en matériau hydrophobe est super hydrophobe.

La super hydrophilie ou la super hydrophobie d'un matériau est mesurée par le test suivant. On prépare une couche plane horizontale du matériau à tester, et on pose une goutte d'eau à la surface de la couche. On mesure ensuite l'angle de mouillage de la goutte, c'est-à-dire l'angle pris entre la couche et la goutte à un point de contact entre la couche et la goutte. Si cet angle est inférieur ou égal à 90°, on considère que le matériau dans lequel la couche est réalisée est super hydrophile. Si cet angle est supérieur ou égal à 110°, on considère que le matériau dans lequel la couche est réalisée est super hydrophobe.

Avantageusement, on consolide ensuite le revêtement 6. On immerge la glace 2 munie du revêtement 6 dans une solution tampon de pH environ égal à 5 comprenant de l'acide 2-(N-morpholino)éthanesulfonique (MES) à une concentration de 0,05 mol.L⁻¹, de l'1-éthyl-3-(3-diméthylaminopropyl)carbodiimide (EDC) à une concentration de 0,2 mol.L⁻¹ et du N-Hydroxysuccinimide (NHS) à une concentration de 0,05 mol.L⁻¹ pendant 18 à 30 minutes puis dans un tampon phosphate salin 1x (PBS 1x) pendant environ 20 minutes. On rince ensuite la glace 2 munie du revêtement 6 en sa surface interne 4 avec de l'eau.

On crée ainsi des liaisons chimiques non seulement entre les différentes couches du revêtement 6, mais également entre le revêtement 6 et la surface interne 4 de la glace 2. De manière à consolider davantage les liaisons chimiques entre les différentes couches du revêtement 6, et donc la tenue mécanique du revêtement 6, on immerge la glace 2 revêtue dans une solution aqueuse de pH environ égal à 9 de glutaraldéhyde à une concentration de 2,5% et à une température de 30°C pendant environ 45 minutes. On rince ensuite la glace 2 avec de l'eau déminéralisée.

On va maintenant décrire les principaux effets des propriétés du revêtement 6.

La couche la plus éloignée de la surface interne 4 de la glace 2 étant en matériau hydrophobe, seules des petites gouttelettes de condensation peuvent se former à la surface libre du revêtement 6. En effet, les gouttes de taille plus importante coulent par gravité du fait de l'hydrophobie de la couche ou se fractionnent.

La couche en matériau hydrophile 8 située en-dessous de la couche hydrophobe 10 la plus éloignée de la surface interne 4 absorbe les gouttelettes, qui diffusent alors à travers cette couche hydrophobe 10. La couche en matériau hydrophile répartit alors l'eau de la gouttelette sur toute la surface du revêtement 6 dans la couche en matériau hydrophile 8 de manière connue en soi. La répartition et la diffusion de l'eau est notamment facilitée si les couches du revêtement 6 comprennent un polysaccharide, notamment grâce à ses groupements de type « hydroxyle », « oxygène » et « carboxyle » aptes à former des liaisons de type « hydrogène » avec les molécules d'eau.

On comprend ainsi qu'une grande partie de l'eau est évacuée par la couche hydrophobe 10, les gouttelettes résiduelles étant absorbées et réparties sur toute la surface du revêtement 6 par la couche hydrophile 8.

Une fois que cette couche hydrophile 8 est saturée en eau, le surplus d'eau est diffusé à travers la troisième couche 10 qui est hydrophobe et est absorbé par la quatrième couche 8 qui est hydrophile. Ce phénomène se poursuit ainsi de proche en proche, jusqu'à ce que la totalité des gouttelettes aient été absorbées par le revêtement 6. Par ailleurs, étant donné que l'eau est répartie dans le revêtement 6 grâce aux couches hydrophiles 8, l'effet du givrage est réduit par rapport à des glaces non revêtues ou munie d'un revêtement à couche unique.

Bien entendu, on pourra apporter à l'invention de nombreuses modifications sans sortir du cadre de celle-ci.

On pourra notamment prévoir que la glace et les différentes couches du revêtement comprennent d'autres matériaux que ceux énoncés dans ce qui précède.

On pourra prévoir de doter le projecteur lumineux d'un organe permettant d'évacuer l'eau ayant ruisselé sur le revêtement de la glace, de manière à éviter une accumulation d'eau dans le projecteur lumineux notamment dans le bas et/ou le fond.

## Revendications

1. Glace (2) pour projecteur lumineux, notamment d'éclairage et/ou de signalisation pour véhicule automobile, comportant une surface interne (4) recouverte au moins partiellement d'un revêtement (6), **caractérisée en ce que** le revêtement (6) comporte au moins une couche (8) comprenant un matériau hydrophile et au moins une couche (10) comprenant un matériau hydrophobe, la couche la plus éloignée de la surface interne (4) étant en matériau hydrophobe.

2. Glace (2) selon la revendication 1, dans laquelle la couche du revêtement (6) en contact avec la surface interne (4) de la glace comprend au moins une partie hydrophile du revêtement.

3. Glace (2) selon l'une quelconque des revendications précédentes, dans laquelle la couche en matériau hydrophile (8) est super hydrophile et la couche en matériau hydrophobe (10) est super hydrophobe.

4. Glace (2) selon l'une quelconque des revendications précédentes, dans laquelle le revêtement (6) est constitué d'une alternance de couches hydrophiles (8) et hydrophobes (10), le revêtement (6) comprenant six à vingt-quatre couches au total.

5. Glace (2) selon la revendication précédente, dans laquelle deux couches hydrophile (8) et hydrophobe (10) successives ont chacune une épaisseur supérieure ou égale à 10 nm.

6. Glace (2) selon l'une quelconque des revendications précédentes, dans laquelle le revêtement (6) a une épaisseur totale comprise entre 20 et 480 nm, de préférence entre 80 et 120 nm.

7. Glace (2) selon l'une quelconque des revendications précédentes, dans laquelle au moins une couche parmi les couches hydrophile (8) et hydrophobe (10) comprend un polysaccharide.

8. Glace (2) selon l'une quelconque des revendications précédentes, dans laquelle le matériau hydrophile comprend de la carboxyméthylcellulose (CMC), ou un mélange de acide polyacrylique et de polyéthylène glycol (PAA-g-PEG).

9. Glace (2) selon l'une quelconque des revendications précédentes, dans laquelle le matériau hydrophobe comprend du chitosane (CHI).

10. Glace (2) selon l'une quelconque des revendications précédentes fabriquée au moins en partie dans un matériau choisi parmi le silicone, le polycarbonate (PC), le polyméthacrylate de méthyle (PMMA) et un verre.

11. Projecteur lumineux, notamment d'éclairage et/ou de signalisation pour véhicule automobile, comprenant une glace selon l'une quelconque des revendications 1 à 10.
